# EUROPEAN PATENT APPLICATION

(11) **EP 3 315 348 A1**
(43) Date of publication of application: **02.05.2018**
(21) Application number: 17461595.5
(22) Date of filing: 24.08.2017
(51) Int. Cl.: B60L 5/22

(54) **PANTOGRAPH HEAD**

(30) Priority: 25.10.2016 PL 41923516
(71) Applicant: Ec Engineering Spólka Z Ograniczona Odpowiedzialnoscia, 31-323 Krakow (PL)
(72) Inventor: Bar, Marcin, 31-231 Kraków (PL); Falkiewicz, Kamil, 38-340 Biecz (PL)
(74) Representative: Krezel, Damian

(57) **Abstract**

A pantograph head for electrical energy supply to a vehicle from an overhead line, according to the present invention, comprises a frame having at least one contact strip (3) to provide electrical contact with the overhead line and, suspension elements (4, 5) connected with the frame for a proper adhesion to the overhead line. A first suspension element is a guiding unit (4) guiding the frame (2) in the xz and yz planes, a second suspension element is a rocker unit (5) guiding the frame in the xz plane and, allowing the frame to swing in the yz plane. The each suspension element (4, 5) comprises a mounting bracket (11), a spring (15) mounted in the bracket (11), a substantially vertical guide (17) which is slidably mounted in an upper (13) and a lower (12) sliding sleeves which are fixed to the bracket (11), whereas the upper part of the guide (17) is fixed to the frame by means of an articulated joint (19).

## Description

The present invention relates to a compact structure of a pantograph head. More specifically, the invention relates to a suspension of a collector head for pantographs, preferably for tramways, applied in rail vehicles and designed to ensure proper interaction with the overhead contact line, allowing electrical energy supply to the vehicle.

The currently known head suspension structures having two contact strips are, in most cases, provided with four guides - two for each strip - connected as to allow either their separate deflection or deflection of two rigidly-clamped contact strips interacting with the suspension system. This quite often results in very complicated suspension structures, application of additional elements to avoid problems with the guiding system and to ensure that the strips and additional elements that limit their vertical and swinging movement would not wedge while moving.

EP1792769 discloses a pantograph head equipped with two integrated contact strips which are connected by means of mounting brackets with two shock absorbers, each of them in the form of a pneumatic cylinder with a spring inside.

EP0439401 discloses a pantograph having a head with two integrated contact strips. The strips are further connected with an arm of the pantograph through flexible damping means and a shock absorber. The dampening element is composed of a casing with a hydraulic fluid. In the casing, there is a slidably mounted piston which ends with a guide fixed to the head.

Additionally, number of cases are known where the contact strips have been damaged by impact of the contact strip against the overhead line. The known solutions do not provide any effective protection against this problem or else, if any, they are highly complex and very heavy. The highly complicated structures result in higher cost of parts and, at the same time, a long assembly and replacement time of components.

Therefore, the object of the present invention is to provide a compact structure of a pantograph head having a very simple and more reliable suspension system, assuring that the head would softly contact the overhead lines and preventing too much damage to the contact strip, thus making its life longer along with keeping its weight low and its structure - simple.

Another object of the invention is to provide a compact pantograph head suspension system including integrated structural solutions ensuring proper head operation, with additional compensation of the contact strip impact force against obstacles, and reduction of its components weight as compared to the present solutions and considerable reduction of the number of components in order to simplify assembly, thus making the system simple and easy to use.

The objectives mentioned above have been achieved by providing a kinematic system of a pantograph head and applying the structural components according to the present invention.

A pantograph head according to the present invention provides for supply of electrical energy to a vehicle from an overhead line. It comprises a frame with at least one contact strip for establishing electrical contact with the overhead line and, suspension elements connected to the frame for a proper adhesion to the overhead line. A first suspension element is a guiding unit which guides the frame in the xz and yz planes, while a second element is a rocker unit guiding the frame in the xz plane and allowing it to swing about in the yz plane. Furthermore, both suspension elements comprise a mounting bracket with a spring mounted in it, a substantially vertical guide which is slidably mounted in upper and lower sliding sleeves which are further fixed to the bracket, whereas the upper part of the guide is connected with the frame by articulated connection.

Preferably, both the upper and the lower sleeves of the guiding unit are rigidly mounted in the mounting bracket. The upper sliding sleeve of the rocker unit can move in the yz plane with respect to the bracket, wherein the lower sliding sleeve can rotate with respect to the bracket. Furthermore, the upper sliding sleeve of the rocker unit has a pass-through opening with a notch, preferably bean-shaped which is positioned as to allow the guide to swing in the yz plane and to guide it in the xz plane. Further, the lower sliding sleeve of the rocker unit is provided with at least one internal, non-cylindrical surface, preferably a conical one, and still more preferably has inclined internal walls, thus allowing the guide to move and rotate in the yz plane.

Preferably, between the spring and the upper sliding sleeve there is a hood which constitutes the upper mounting socket for the spring. The lower sliding sleeve, in turn, constitutes the lower mounting socket for the spring.

Preferably, the guide comes axially through both the upper and the lower sliding sleeves and through the spring. The guide has a recess which constitutes the supporting surface for the hood, while the surface of the guide above the recess interacts with the upper sliding sleeve, whereas the surface of the guide below the recess interacts with the lower sliding sleeve.

Preferably, in the upper part of the guide, there is a shaft embedded within a ball joint, wherein at least one flexible element is mounted on the shaft, preferably a spring or, alternatively, two springs situated at both sides of the joint. Between the spring and the joint, on the shaft, there is a washer constituting a supporting surface for the spring, and the deflection limiter.

Preferably, the shaft and the springs are embedded in the connectors, the connector preferably in the form of a cuboidal casing with an internal stepped opening - a pass-through or a blind one, whereas the larger opening makes up the mounting socket for the spring and the smaller one - the mounting socket for the shaft.

Preferably, between the guide and the joint there is a limiter mounted on the joint end, the join end is further fixed to the guide.

Preferably, at the bottom the connectors are connected with limiter plates interacting with the limiter mounted on the joint end.

Preferably, the ball joint is connected via connectors with a cross-bar fixed to the frame or clamping the contact strips together.

The main advantage of the invention is a proper head adhesion to the overhead lines and preventing excessive damage of the contact strip, wherein the structure is simple, weight is decreased and production costs are low.

Providing the suspension system with two - instead of four - properly graduated and resistant guides with fixed spacing of brackets in the form of sliding sleeves at a given height allows transferring the operation loads and preventing the contact strips from wedging and jamming.

Implementation of plain bearings on the upper guide ends enable the contact strips unit to rotate in the yz plane, which is necessary to maintain the electrical contact when the suspension springs deflect asymmetrically while the overhead contact line zigzags, and in the xz plane (swinging), which is necessary to maintain the electrical contact on both contact strips when the overhead contact line height changes.

Implementation of suspension spring limiters secured to their guides according to the invention enables flexible head operation, while maintaining the sliding bracket spacing which ensures that the contact string assembly would not wedge.

Implementation of a single sleeve with an enlarged notch, preferably a bean-shaped one and positioned transversally to the drive's direction, while maintaining other sliding and rotating kinematic pairs according to the invention, makes the head kinematic system stable and resistant to wedging.

Implementation of a limiter in the form of a threaded plate allows integrating three functions: that of the vertical movement limiter, head balancing movement limiter and the nut locking the joint end's embedding in the rod-form guide.

Application of highly rigid springs placed opposite each other closely at the connection point of the guide joint end with the head cross-bar ensures a considerable reduction of the impact force occurring when the contact strip strikes against an obstacle, thus protecting the contact strips and other structure elements, including the guides, from overload.

Implementation of connectors in the form of milled elements made from light alloys (preferably aluminum) directly at the connection point of the guide joint end with the head cross-bar allows to integrate several functions: that of a socket for the springs, a socket for the shaft constituting the joint end rotation axis, a cross-bar connector, and a connector for the limiter plate functioning as a buffer and a solid limiter of the springs excessive deflection. The additional advantage of these elements is the possibility to apply exclusively bolted connections, which makes this structure separable and full advantage is taken of the material's strength without adverse effect on its properties as in the case of welded joints, thanks to which its strength-to-weight ratio is high.

Implementation of a cross-bar in the form of a standard, mechanically treated, element made of light alloys (preferably aluminum) clamping both contact strips together and connecting them to the suspension system allows an easy access to them and their independent removal without having to disassemble other device elements.

Implementation of a lower sliding sleeve made of plastic allows integrating three functions: that of the lower guide slide, the lower socket of the suspension spring, and the vertical movement limiter.

Basically, all the elements of the suspension assemblies are identical, with the exception of a sleeve with an enlarged, bean-shaped opening with a notch, which means that a greater amount of replicable elements is used, thus the final product being cheaper.

The subject of the invention is presented below as an exemplary embodiment with regard to the attached drawings, in which:

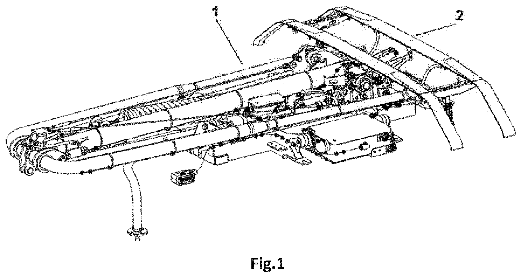

Fig. 1 - presents the general pantograph overview with its head
Fig. 2 - presents the head's kinematic system in the yz plane

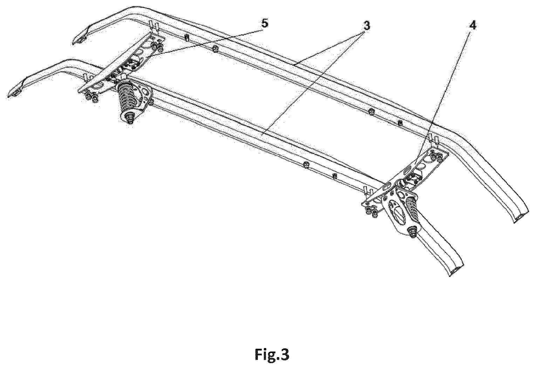

Fig. 3 - presents the isometric view of the head showing its basic assemblies

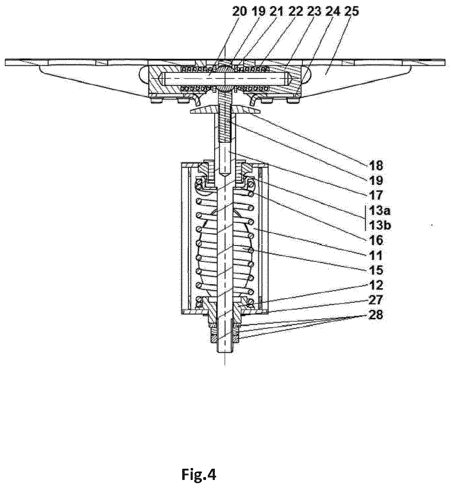

Fig. 4 - presents the section view of the suspension assembly

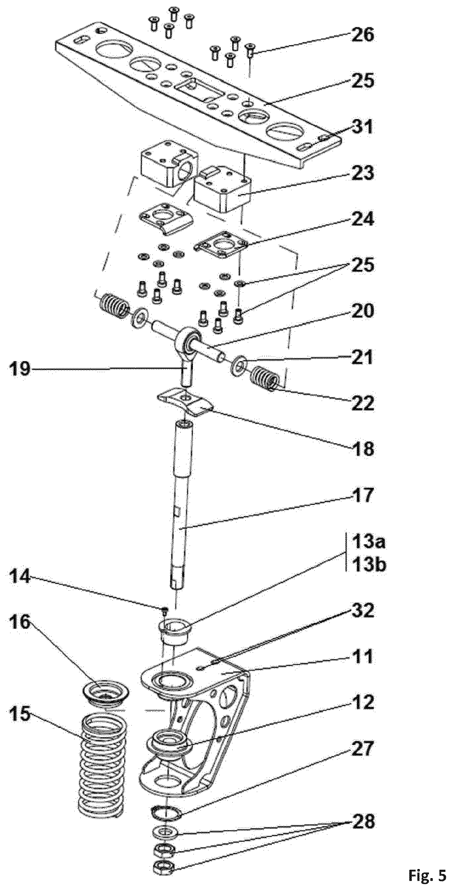

Fig. 5 - presents the isometric exploded view of the suspension assembly

### Detailed description on the invention

In one preferred embodiment of the present invention, the head 2 of a pantograph 1 is made up of just several individually dismountable elements: the frame with two identical contact strips 3 fixed on it, the suspension elements in the form of the guiding unit 4 and the rocker unit 5. It should be also noted that the invention can be applied in any head equipped with one or more contact strips, but it is also possible to apply it with just one suspension unit which may be positioned centrally.

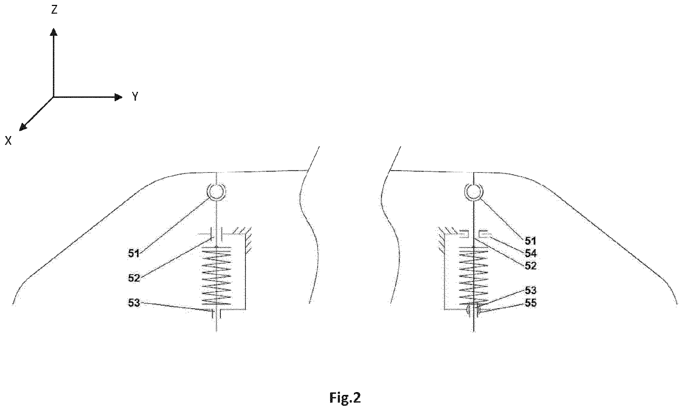

The suspension elements 4, 5 are responsible for implementation of the kinematic scheme as presented in Figure 2. The suspension elements 4, 5 are connected by means of an articulated joint with the frame 2 via the mounting cross-bars 25 located along the overhead contact line. The guiding unit 4 comprises a basically vertical guide 17 connected from above with the ball joint 19 (kinematic pair 51), to which the mounting cross-bar 25 for strips is connected. The cross-bar 25 can be a part of the frame 2. The frame can be also made up of the strips casings 3 interconnected with mounting cross-bars 25 into a single unit. In fact, the frame can be made up in any manner whatsoever. The guide 17 of the guiding unit 4 is slidably mounted in the upper sliding sleeve 13 (kinematic pair 52) which is rigidly fixed in the suspension bracket 11 and the guide 17 is further slidably mounted in the lower sliding sleeve 12 (kinematic pair 53) which is rigidly fixed in the suspension bracket 11. The rocker unit 5 is equipped with the mounting cross-bar 25 which comes fixed onto the ball joint 19 (kinematic pair 51) to the guide 17. The guide 17 is slidably mounted (kinematic pair 52) in the upper sliding sleeve 13 that can move in the yz plane (kinematic pair 54) with respect to the mounting bracket 11 and is slidably mounted in the lower sliding sleeve 12 (kinematic pair 53) that can rotate (kinematic pair 55) in relation to the mounting bracket 11. In the following embodiment, the combined kinematic pairs 52 and 54 make up together the first element which serves both functions, and the kinematic pairs 53 and 55 are combined, also making up an element which serves both functions which additionally, for the elements unification sake, have been used in both suspension units. Both suspension units 4 and 5 are equipped with connections 31 for strips 3 and connections 32 for the head 2 in order to fix them to the structure of the pantograph 1.

The central element of the suspension unit 4, 5 is the mounting bracket 11 made preferably as a welded steel component. In another embodiment, it can be a bolted group or aluminum cast. Inside the bracket 11 the upper sliding sleeve 13 is mounted. In case of the guiding unit, the sleeve 13a has a pass-through, round opening, being at the same time a guiding sleeve for the guiding unit 4. In the case of the rocker 5, the sliding sleeve 13b has a pass-through, bean-shaped opening with a notch, the notch being positioned transversally to the drive direction, allowing the guide 17 to swing by a reduced angle in the yz plane. In both cases, the sliding sleeve 13 is protected with the element 14 provided in order to block the rotation inside the bracket 11 socket and to ensure correct position of the sleeve 13 during operation. In the lower part of the bracket 11, the lower sliding sleeve 12 is arranged, protected from below with the ring 27 or another element protecting it from dropping out. The lower sliding sleeve 12 has a radial resistance threshold and an axial peripheral threshold, thus making up a socket in which the spring 15 is mounted. The lower sliding sleeve 12 of the rocker unit 5 is provided with inclined internal walls (of which at least one surface is conical), allowing the guide 17 operation when slightly deviated from the vertical axis, which is critical in case of the rocker unit 5. In yet another embodiment, it is possible to meet the kinematic system by mounting the sliding sleeve 12 in the plain bearing embedded in the suspension bracket 11. Inside the lower sliding sleeve 12 the spring 15 is inserted from above with the hood 16 on it as its upper socket. Axially, through the lower and the upper sliding sleeves 13a or 13b, 12 and through the suspension spring 15, 16 passes the guide 17 with a recess making up the supporting surface for the hood 16 of the spring 15. The guide 17 surface above the recess interacts with the upper sliding sleeve 13a, 13b, whereas the guide 17 surface below the recess interacts with the lower sliding sleeve 12. From below, the guide 17 is protected by a group of the joining elements 28 against being pushed out, including a nut and a locking nut serving to fix and adapt the suspension spring preload.

In the upper part of the suspension units 4, 5 there is the cross-bar 25 connecting the contact strips 3 via the mounting points 31. Directly to the cross-bar 25, connectors 23 are mounted by means of the joining elements 26, preferably in the form of a cuboidal casing, with an internal stepped opening - a pass-through or a blind one. The larger opening makes up the socket of the spring 22, whereas the smaller one serves as a mounting socket for the shaft 20. On the shaft 20, the joint end 19 is tightly mounted along with at least one buffer spring unit 22 with the washer 21, serving as the spring 22 supporting surface and as the connector 23 deflection limiter. The connectors 23 are connected from below with the joining elements 25 to the limiter24 plates, serving as a buffer and interacting with the limiter 18 placed below and fixed on the joint end 19 in order to limit the head 2 swinging angle in the xz plane. The limiter 18 mounted in this way serves at the same time as a locking nut for the joint end 19 embedding in the guide 17 and as a limiter of the head 2 maximum deflection (vertical movement).

## Claims

1. A pantograph head for electrical energy supply to a vehicle from an overhead line, comprising:
a frame having at least one contact strip (3) to provide electrical contact with the overhead line and,
suspension elements (4, 5) connected with the frame for a proper adhesion to the overhead line,
**characterised in that** a first suspension element is a guiding unit (4) guiding the frame (2) in the xz and yz planes,
a second suspension element is a rocker unit (5) guiding the frame in the xz plane and, allowing the frame to swing in the yz plane,
wherein the each suspension element (4, 5) comprises a mounting bracket (11), a spring (15) mounted in the bracket (11), a substantially vertical guide (17) which is slidably mounted in an upper (13) and a lower (12) sliding sleeves which are fixed to the bracket (11), whereas the upper part of the guide (17) is fixed to the frame by means of an articulated joint (19).

2. A pantograph head according to claim 1, **wherein** the upper sleeve (13a) and the lower sleeve (12) of the guiding unit (4) are rigidly mounted in the support bracket (11).

3. A pantograph head according to claim 1 or 2, **wherein** as regarding the rocker unit (5), the upper sliding sleeve (13b) can move in the yz plane with respect to the bracket (11), whereas the lower sliding sleeve (12) can rotate with respect to the bracket (11).

4. A pantograph head according to claim 1 or 2 or 3, **wherein** the upper sliding sleeve (13b) of the rocker unit (5) has a pass-through opening with a notch, preferably bean-shaped so positioned as to allow the guide (17) to swing in the yz plane and to move in the xz plane.

5. A pantograph head according to claim 1 or 2 or 3 or 4, wherein the lower sliding sleeve (12) of the rocker unit (5) has at least one non-cylindrical internal surface, preferably a conical one, and, more preferably still, having its internal walls inclined, allowing the guide (17) to move and to rotate in the yz plane.

6. A pantograph head according to claim 1, wherein between the spring (15) and the upper sliding sleeve (13) there is a hood (16) making up the upper mounting socket for the spring (15).

7. A pantograph head according to claim 1 or 6, **wherein** the lower sliding sleeve (12) makes up the lower mounting socket for the spring (15).

8. A pantograph head according to claim 1 or 6 or 7, **wherein** the guide (17) passes axially through the upper and the lower sliding sleeves (12, 13) and through the spring (15).

9. A pantograph head according to claim 6 or 8, **wherein** the guide (17) has a recess making up a supporting surface for the hood (16) of the spring (15), wherein the guide (17) surface above the recess interacts with the upper sliding sleeve (13), and whereas the guide (17) surface below the recess interacts with the lower sliding sleeve (12).

10. A pantograph head according to claim 1, **wherein** in the upper part of the guide (17) there is a shaft (20) which is embedded within the ball joint (19), whereas on the shaft (20) at least one flexible element is mounted, preferably a spring (22), or, more preferably still, two springs positioned on both sides of the joint (19).

11. A pantograph head according to claim 10, **wherein** between the spring (22) and the joint (19) and on the shaft (20) there is a washer (21) being the supporting surface of the spring (22), and the deflection limiter.

12. A pantograph head according to claim 10 or 11, **wherein** the shaft (20) and the springs (22) are embedded in the connectors (23), the connector preferably in the form of a cuboidal casing having an internal stepped opening - a pass-through or a blind one, whereas the larger opening makes up the mounting socket for the spring (22) and the smaller one - the mounting socket for the shaft (20).

13. A pantograph head according to claim 10 or 11 or 12, **wherein** between the guide (17) and the joint (19) there is a limiter (18) mounted on the joint end (19), the joint end is further mounted on the guide (17).

14. A pantograph head according to claim 10 or 11 or 12 or 13, **wherein** the connectors (23) are connected from below (25) with limiter plates (24) which interact with the limiter (18).

15. A pantograph head according to claim 10 or 11 or 12 or 13 or 14, **wherein** the ball joint (19) is connected through the connectors (23) with a cross-bar (3) fixed to the frame (2) or clamping the contact strips (3) together.
